## Europäisches Patentamt

(19) **European Patent Office**

**Office européen des brevets**

(11) Veröffentlichungsnummer: **0 155 381**
**B1**

(12) # EUROPÄISCHE PATENTSCHRIFT

(45) Veröffentlichungstag der Patentschrift:
**11.05.88**

(21) Anmeldenummer: **84115228.3**

(22) Anmeldetag: **12.12.84**

(51) Int. Cl.⁴: **G 11 B 5/592**

(54) **Anordnung zur Spurnachführung in Videorecordern unter Verwendung von Piezoelementen.**

(30) Priorität: **25.02.84 DE 3406929**

(43) Veröffentlichungstag der Anmeldung:
**25.09.85 Patentblatt 85/39**

(45) Bekanntmachung des Hinweises auf die Patenterteilung:
**11.05.88 Patentblatt 88/19**

(84) Benannte Vertragsstaaten:
**AT BE CH DE FR GB IT LI**

(56) Entgegenhaltungen:
**EP - A - 0 091 750**
**EP - A - 0 091 764**
**FR - A - 2 469 072**
**GB - A - 2 048 545**
**US - A - 4 471 392**

**PATENT ABSTRACTS OF JAPAN, Band 7, Nr. 212, Seite (P-224) (1357); &JP-A-58-105426 (TOKYO SHIBAURA DENKI) 23-06-1983**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Kotter, Karl-Heinz, Ackerstrasse 10, D-8502 Zirndorf-Weiherhof (DE)**

## Beschreibung

Die Erfindung betrifft eine Anordnung zur Spurnachführung in Videorecordern mit einem rotierenden Kopfrad, wobei die Magnetköpfe an Piezoelementen befestigt sind und jeder Kopf während einer Vollumdrehung des Kopfrades eine Bandeingriffsphase und eine Nichteingriffsphase hat, und wobei an das Piezoelement eines Kopfes, der gerade im Bandeingriff steht, eine Spannung angelegt wird, die den Kopf auf der vorgesehenen Spur hält, und wobei an das Piezoelement eines Kopfes, der gerade nicht im Bandeingriff steht, eine abklingende Wechselspannung zur Beseitigung des Hystereseeffektes des Piezoelementes angelegt wird.

Seit einiger Zeit werden in Videorecordern zur exakten Spurhaltung Piezoelemente (in diesem Zusammenhang auch «Aktuatoren» oder «Bimorphe» genannt) verwendet, auf denen die Magnetköpfe befestigt sind. Die Piezoelemente weisen die Eigenschaft auf, dass sie beim Anlegen einer Spannung je nach Polarität in die eine oder in die andere Richtung ausgelenkt werden, so dass die Magnetköpfe senkrecht zur Abtastrichtung bewegt werden können. Steuert man die Piezoelemente mit einer Regelspannung entsprechend dem Spurfehler an, so folgen die Videoköpfe genau den vorgesehenen Spuren.

Aus der europäischen Offenlegungsschrift mit der Publikationsnummer 0091750 ist eine Anordnung zur Spursteuerung bekannt, bei der ein auf einem Piezoelement befestigter Magnetkopf während der Bandeingriffsphase durch das Anlegen einer positiven oder negativen Gleichspannung an eine vorgegebene Stelle gebracht wird. Nach dem Abschalten dieser Gleichspannung am Beginn der Nichteingriffsphase kehrt die Kopf-Piezoelement-Einheit nicht wieder exakt in ihre Ausgangsposition zurück, da aufgrund des Hystereseeffektes im Piezoelement eine Restauslenkung verbleibt, die die Nullpunktanlage der Kopf-Piezoelement-Einheit verändert. Demzufolge werden bei der nächsten Bandeingriffsphase dieses Kopfes Spurfehler auftreten. Um diese möglichst schnell auszuregeln, überlagert man der an das Piezoelement angelegten Gleichspannung während der Nichteingriffsphase eine abklingende sinusförmige Wechselspannung. Nach dem Abklingen dieser sinusförmigen Wechselspannung liegt am Piezoelement die Spannung an, die die jeweils geforderte Ablenkung des Magnetkopfes bewirkt.

Des weiteren ist aus der europäischen Offenlegungsschrift mit der Publikationsnummer 0091764 eine Vorrichtung bekannt, die ebenso wie der Erfindungsgegenstand zur Spurregelung den Piezoeffekt ausnutzt. Bei der bekannten Vorrichtung sind zwei um 180 Grad versetzte Magnetköpfe an Piezoelementen befestigt, die ihrerseits fest mit dem Kopfrad verbunden sind. Zur Vermeidung eines Spurfehlers bei im Vergleich zur Aufzeichnung unterschiedlicher Wiedergabegeschwindigkeit wird an die beiden Piezoelemente während des jeweiligen Bandeingriffs ein dreieckförmiges Spurkorrektursignal angelegt. Während des Nichteingriffs behält das Piezoelement und damit auch der daran befestigte Magnetkopf eine Restauslenkung, so dass auch bei dieser Anordnung die Nullpunktlage der Kopf-Piezoelement-Einheit verändert wird, was am Beginn der nächsten Bandeingriffsphase des Magnetkopfes zu einem Spurfehler führt. Zur Vermeidung dieses Spurfehlers am Beginn der nächsten Bandeingriffsphase wird dem Piezoelement während der Nichteingriffsphase eine abklingende sinusförmige Wechselspannung zugeführt, die die fehlerhafte Nullpunktlage der Kopf-Piezoelement-Einheit beseitigt, d. h. die Restauslenkung des Kopfes rückgängig macht, so dass der Kopf am Beginn der nächsten Bandeingriffsphase genau die jeweilige Soll-Spur überdeckt. Die bekannte Vorrichtung enthält weiterhin eine Umpolvorrichtung, die in Abhängigkeit davon, ob das Piezoelement in die eine oder in die andere Richtung ausgelenkt wurde, d. h. die Wiedergabegeschwindigkeit kleiner oder grösser als die Aufzeichnungsgeschwindigkeit war, dem Piezoelement eine geeignet gepolte Spannung zur Beseitigung von Hystereseeffekten zuführt. Es zeigt sich also, dass der Versuch, die Hystereseeffekte ohne Verwendung einer Umpolvorrichtung für die abklingende Wechselspannung zu beseitigen, noch keine zufriedenstellenden Ergebnisse bringt.

Ausgehend von diesem Stand der Technik liegt der vorliegenden Erfindung die Aufgabe zugrunde, eine verbesserte Anordnung zur Beseitigung von Hystereseeffekten einer Kopf-Piezoelemente-Einheit zu schaffen, mit der auch ohne Verwendung einer Umpolvorrichtung die Hystereseeffekte der Kopf-Piezoelemente-Einheit vollständig beseitigt werden.

Die Lösung dieser Aufgabe erfolgt durch die kennzeichnenden Merkmale des Patentanspruchs.

Die Vorteile der Erfindung liegen nicht nur darin, dass die Videoköpfe am Beginn ihrer nächsten Bandeingriffsphase an ihrer Sollposition stehen, sondern insbesondere auch darin, dass eine Desensibilisierung der Piezoelemente vermieden wird, also keine Verringerung der Empfindlichkeit gegenüber der angelegten Spannung auftritt, was bei einem längeren Anliegen einer Spannung (insbesondere einer hohen Gleichspannung) an einem Piezoelement der Fall sein könnte.

Im folgenden wird die Erfindung an einem Ausführungsbeispiel näher erläutert. Dabei zeigen:

Fig. 1 ein Blockschaltbild mit allen für die Erfindung wesentlichen Bauteilen und

Fig. 2 ein Diagramm, das die Verläufe der an die Piezoelemente angelegten Spannungen als Funktion der Zeit zeigt.

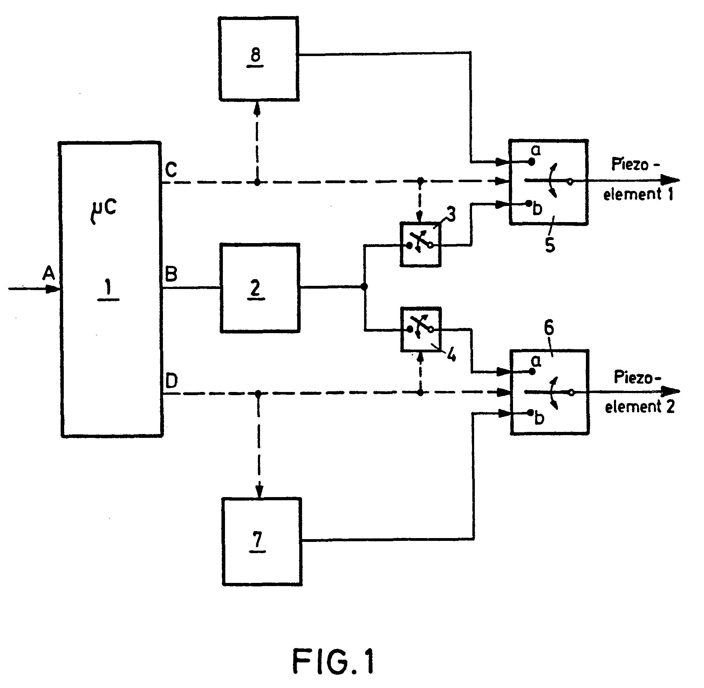

Im Ausführungsbeispiel von Figur 1 wird dem Eingang A eines Microcomputers 1 eine auf bekannte Art und Weise erzeugte digitale, impulsbreitenvariable Regelspannung zugeführt, die eine genaue Auskunft über die Abweichung des jeweiligen Magnetkopfes von der Sollspurlage gibt. Eine detaillierte Beschreibung der Erzeugung einer derartigen Regelspannung kann beispielsweise der Zeitschrift «Grundig Technische Informationen» 3/81, S. 110–116, entnommen werden.

Der Microcomputer 1 erzeugt an seinem Ausgang B vom jeweiligen Betriebszustand (Aufzeichnung, Wiedergabe, Zeitlupe, Zeitraffer) abhängige digitale Regelsignale für die Piezoelemente. Diese Regelsignale werden in einem Digital/Analog-Wandler 2 digital-/analog-gewandelt und zwei Schaltern 3 und 4 zugeführt. Die Öffnungs- und Schliesszeiten dieser Schalter sowie der Schalter 5 und 6 werden von den an den Ausgängen C und D des Microcomputers 1 anliegenden Steuersignalen gesteuert. Der Schalter 3 ist immer dann geschlossen, wenn der am Piezoelement 1 befestigte Kopf im Bandeingriff steht. Der Schalter 5 befindet sich während dieser Zeitspanne in der Stellung b, so dass die am Ausgang des D/A-Wandlers 2 anliegende Regelspannung über die Schalter 3 und 5 an das Piezoelement 1 weitergegeben wird und der am Piezoelement 1 befestigte Magnetkopf der durch die Regelspannung vorgegebenen Spur folgt.

Ist die Kopf-Piezoelement-Einheit 1 im Bandeingriff, dann befindet sich die Kopf-Piezoelement-Einheit 2 in ihrer Nichteingriffsphase. Diese Zeitspanne wird ausgenutzt, um dem Piezoelement 2 über den Schalter 6, der sich hierbei in der Stellung b befindet, eine abklingende rechteckförmige Spannung von einem vom Microcomputer 1 gesteuerten Generator 7 zuzuführen. Damit wird eine eventuelle Restauslenkung des zugehörigen Magnetkopfes, die ihre Ursache in der Hysterese im Piezoelement 2 hat, vollständig beseitigt. Besonders wirkungsvoll ist gemäss einem Merkmal der Erfindung die Beseitigung der Hystereseeffekte des Piezoelementes dann, wenn die Frequenz der angelegten Rechteckspannung knapp unterhalb der mechanischen Resonanzfrequenz (ungefähr 1 kHz) des Piezoelementes liegt, also beispielsweise in der Grössenordnung von 700 Hz.

Hat der Magnetkopf 1 die Spur zu Ende gelesen bzw. geschrieben, so findet eine vom Microcomputer gesteuerte Kopfumschaltung statt. Jetzt wird eine am Ausgang des D/A-Wandlers 2 anliegende analoge Regelspannung durch den geschlossenen Schalter 4 und den Schalter 6, der sich in der Stellung a befindet, an das Piezoelement 2 weitergeleitet, so dass der am Piezoelement 2 befestigte Magnetkopf der ihm durch die Regelspannung aufgeprägten Spur folgt. Der Schalter 3 ist in dieser Phase geöffnet. Gleichzeitig dazu wird dem Piezoelement 1 über den Schalter 5, der sich in dieser Phase in der Stellung a befindet, eine abklingende Rechteckspannung von einem vom Microcomputer 1 gesteuerten Generator 8 zur vollständigen Beseitigung des Hystereseeffektes des Piezoelementes 1 zugeführt, die eine eventuelle Restauslenkung der Kopf-Piezoelement-Einheit 1 beseitigt, so dass der Magnetkopf 1 am Beginn seines nächsten Bandeingriffes an der richtigen Stelle steht.

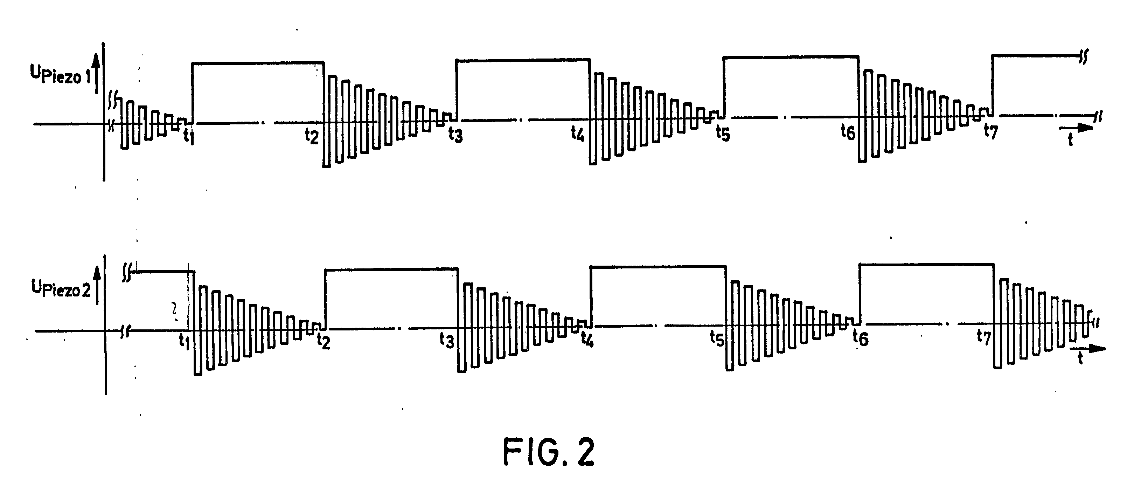

Figur 2 gibt einen Überblick über die an die Piezoelemente 1 und 2 angelegten Spannungen. Dabei entsprechen die Zeitintervalle

$[t_1, t_2], [t_3, t_4], [t_5, t_6],...$

den Bandeingriffsphasen der Kopf-Piezoelement-Einheit 1 und den Nichteingriffsphasen der Kopf-Piezoelement-Einheit 2 und die Zeitintervalle

$[t_2, t_3], [t_4, t_5], [t_6, t_7],...$

den Bandeingriffsphasen der Kopf-Piezoelement-Einheit 2 und den Nichteingriffsphasen der Kopf-Piezoelement-Einheit 1.

Die obengenannten Zeitintervalle, die für die Beseitigung der Hystereseeffekte der Piezoelemente 1 bzw. 2 zur Verfügung stehen, liegen bei Verwendung von zwei um 180 Grad versetzten Magnetköpfen im Normalbetrieb bei 20 msec. Es hat sich überraschenderweise gezeigt, dass eine Beseitigung der Hystereseeffekte der Piezoelemente besonders wirkungsvoll ist, wenn die Frequenz der Spannung zur Beseitigung der Hystereseeffekte knapp unterhalb der mechanischen Resonanzfrequenz der Piezoelemente gewählt wird, die in der Grössenordnung von 900–1200 Hz liegt, und eine abklingende Rechteckspannung verwendet wird. Bei der Wahl der Frequenz muss lediglich darauf geachtet werden, dass keine störenden Resonanzerscheinungen auftreten, d.h. dass die Frequenz nicht zu nahe bei der mechanischen Resonanzfrequenz der Piezoelemente liegt.

Wählt man beispielsweise 700 Hz, dann beträgt die Dauer einer Schwingung 1,4 msec. In der zur Verfügung stehenden Zeitspanne von 20 msec. wäre somit eine Beseitigung der Hystereseeffekte mit ca. 14 Schwingungen möglich.

Der exakte Verlauf des Abklingvorganges (Verlauf der Einhüllenden der abklingenden Rechteckspannung) richtet sich nach den physikalischen Eigenschaften des jeweils verwendeten Aktuatormaterials. Es ist in jedem Fall darauf zu achten, dass die Amplitude der letzten Rechteckschwingung hinreichend klein gewählt wird.

Bei einigen neueren Entwicklungen im Videobereich (z. B. Kamerarecorder) werden immer kleinere Kopfräder verwendet und es liegt eine Überumschlingung des Magnetbandes um das Kopfrad vor. Demzufolge werden die Nichteintauchphasen der Kopf-Piezoelement-Einheiten und damit die zum Beseitigen der Hystereseeffekte zur Verfügung stehenden Zeitintervalle kleiner. Auch werden bei einigen neueren Trends die Zeitintervalle, in denen Spannungen (insbesondere Gleichspannungen) an den Piezoelementen anliegen, und/oder die Amplituden der an die Piezoelemente angelegten Spannungen grösser. Dies kann eine Desensibilisierung der Piezoelemente gegenüber der angelegten Spannung zur Folge haben, d.h. die Piezoelemente können dann, wenn über einen längeren Zeitraum eine hohe Gleichspannung an ihnen anliegt, gegenüber der angelegten Spannung unempfindlich werden, so dass Spurfehler entstehen. Auch dieser Nachteil wird durch eine Beseitigung der Hystereseeffekte nach der vorliegenden Erfindung in vorteilhafter Weise vermieden.

**Patentanspruch**

1. Anordnung zur Spurnachführung in Videorecordern mit einem rotierenden Kopfrad, wobei die Magnetköpfe an Piezoelementen befestigt sind und jeder Kopf während einer Vollumdrehung des Kopfrades eine Bandeingriffsphase und eine Nichteingriffsphase hat, und wobei an das Piezoelement eines Kopfes, der gerade im Bandeingriff steht, eine Spannung angelegt wird, die den Kopf auf der vorgesehenen Spur hält, und wobei an das Piezoelement eines Kopfes, der gerade nicht im Bandeingriff steht, eine abklingende Wechselspannung zur Beseitigung von Hystereseeffekten des Piezoelementes angelegt wird, gekennzeichnet durch die folgenden Merkmale:

die abklingende Wechselspannung ist rechteckförmig und

die Frequenz der abklingenden Wechselspannung zur Beseitigung von Hystereseeffekten des Piezoelementes liegt knapp unterhalb der mechanischen Resonanzfrequenz des Piezoelementes.

**Claim**

1. Scan tracking arrangement in video recorders having a rotating head wheel, in which arrangement the magnetic heads are attached to piezoelectric elements and each head has a tape contact phase and a non-contact phase during one full revolution of the head wheel, and in which arrangement a voltage which holds the head on the intended track is applied to the piezoelectric element of a head which is in tape contact at that time, and in which arrangement a decaying alternating voltage for eliminating hysteresis effects of the piezoelectric element is applied to the piezoelectric element of a head which is not in tape contact at that time, characterized by the following features:

the decaying alternating voltage is rectangular and the frequency of the decaying alternating voltage for eliminating hysteresis effects of the piezoelectric element is just below the frequency of mechanical resonance of the piezoelectric element.

**Revendication**

1. Dispositif pour réaliser le suivi de piste dans des enregistreurs vidéo comportant un disque porte-têtes rotatif, dans lequel les têtes magnétiques sont fixées sur des éléments piézoélectriques et chaque tête possède, pendant une rotation complète du disque porte-têtes, une phase de contact avec la bande et une phase d'absence de contact avec la bande, et dans lequel à l'élément piézoélectrique d'une tête, qui est précisément en contact avec la bande, se trouve appliquée une tension qui maintient la tête sur la piste prévue, et dans lequel à l'élément piézoélectrique d'une tête, qui précisément n'est pas en contact avec la bande, est appliquée une tension alternative décroissante servant à éliminer des effets d'hystérésis de l'élément piézoélectrique, caractérisé par les caractéristiques suivantes:

la tension alternative décroissante possède une forme rectangulaire, et

la fréquence de la tension alternative décroissante servant à éliminer les effets d'hystérésis de l'élément piézoélectrique est juste inférieure à la fréquence de résonance mécanique de l'élément piézoéletrique.

FIG.1

FIG. 2